(19) **Europäisches Patentamt**
**European Patent Office**
**Office européen des brevets**

(11) **EP 2 652 269 B1**

(12) **FASCICULE DE BREVET EUROPEEN**

(45) Date de publication et mention
de la délivrance du brevet:
**07.03.2018 Bulletin 2018/10**

(21) Numéro de dépôt: **11813545.8**

(22) Date de dépôt: **12.12.2011**

(51) Int Cl.:
*F01D 15/10* [(2006.01)]   *F02C 3/10* [(2006.01)]
*F02C 7/26* [(2006.01)]   *F02C 7/275* [(2006.01)]
*F02C 7/32* [(2006.01)]

(86) Numéro de dépôt international:
**PCT/FR2011/052935**

(87) Numéro de publication internationale:
**WO 2012/080633 (21.06.2012 Gazette 2012/25)**

(54) **PROCEDE DE CONTROLE DE LA GENERATION ELECTRIQUE APPLIQUEE A UNE TURBINE A GAZ D'AERONEF ET DISPOSITIF METTANT EN OEUVRE UN TEL PROCEDE**

VERFAHREN ZUR STEUERUNG DER STROMERZEUGUNG FÜR EINE FLUGGASTURBINE UND VORRICHTUNG ZUR DURCHFÜHRUNG DIESES VERFAHRENS

METHOD FOR CONTROLLING THE GENERATION OF ELECTRICITY APPLIED TO AN AIRCRAFT GAS TURBINE, AND DEVICE IMPLEMENTING SUCH A METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.12.2010 FR 1060419**

(43) Date de publication de la demande:
**23.10.2013 Bulletin 2013/43**

(73) Titulaire: **Safran Helicopter Engines**
**64510 Bordes (FR)**

(72) Inventeurs:
• **LANGFORD, Stephen**
**F-64000 Pau (FR)**
• **HARRIET, Pierre**
**F-64140 Billere (FR)**

(74) Mandataire: **Gevers & Orès**
**9 rue St Antoine du T**
**31000 Toulouse (FR)**

(56) Documents cités:
**EP-A1- 0 274 951    EP-A1- 1 852 953**
**EP-A2- 1 712 761    FR-A1- 2 914 697**
**FR-A1- 2 929 324**

**Description**

## DOMAINE TECHNIQUE

L'invention concerne un procédé de contrôle de la génération électrique appliquée à une turbine à gaz d'aéronef, plus particulièrement dans ses phases transitoires d'accélération et de décélération. L'invention s'applique en particulier à un turbomoteur d'hélicoptère apte à mettre en oeuvre un tel procédé.

L'invention concerne le domaine des turbines à gaz, en particulier les turbomoteurs, turboréacteurs ou turbopropulseurs d'aéronefs (hélicoptères, avions, autres engins volants).

Un moteur d'aéronef comporte classiquement un ensemble compresseur-chambre de combustion-turbine formant un générateur de gaz. Dans ce générateur de gaz, l'air frais est comprimé par la rotation du compresseur et transmis dans la chambre où il est mélangé au carburant puis, après combustion, les gaz chauds sont évacués avec une énergie cinétique élevée et détendus dans la turbine qui extrait l'énergie d'entraînement en rotation du compresseur via un arbre de transmission haute pression (HP en abrégé) ou corps HP. L'excédent d'énergie cinétique fournit l'énergie de déplacement de l'aéronef, soit directement pour les avions par une tuyère d'éjection, soit indirectement pour les hélicoptères via une nouvelle détente dans une turbine libre et un arbre de transmission (aval, traversant ou via un arbre extérieur au générateur de gaz).

## ÉTAT DE LA TECHNIQUE

Dans le cas d'un turbomoteur d'hélicoptère, une grande partie de l'énergie mécanique délivrée par cet arbre de transmission est fournie au mécanisme d'entraînement du rotor et aux consommateurs (pompe hydraulique, appareillages électriques, climatisation, frein rotor, etc.) via des pignonneries de réduction de vitesses ou, plus rationnellement, via une boîte d'accessoires (ci-après BA). Une partie non négligeable de la puissance mécanique peut être prélevée directement sur le générateur de gaz (génération électrique, prélèvements d'air pour réchauffage cabine, ...).

En phase de démarrage du turbomoteur, une source électrique réversible - encore appelée génératrice/démarreur, en abrégé GD - alimentée par une batterie - fonctionne en mode démarreur comme un moteur d'entraînement en rotation du compresseur jusqu'au fonctionnement autonome du générateur de gaz. Puis, en phases transitoires - décollage, atterrissage, stationnaire - ou intermédiaires de vol stabilisé - croisière, recherche à basse altitude - la source GD prélève de l'énergie cinétique sur le générateur de gaz pour fonctionner en mode génératrice et alimenter les appareillages consommateurs électriques (commandes, climatisation, pompe, ...) du réseau électrique de bord.

Cependant, le prélèvement d'énergie sur le générateur de gaz pour alimenter le réseau de bord est pénalisant en termes de marge au pompage pour la ligne de fonctionnement, et contribue fortement à limiter les performances d'accélération du générateur de gaz lorsque le prélèvement mécanique instantané n'est pas connu du système de régulation. Afin de conserver une marge au pompage suffisante, le compresseur ne fonctionne plus à un taux de compression optimal et les performances sont dégradées, en particulier la consommation spécifique est augmentée. Ceci est particulièrement sensible pour les moteurs pilotés en variation de vitesse de générateur de gaz (dng/dt). En outre, les exigences en accélération et décélération étant de plus en plus élevées, les variations de vitesse de la turbine libre et du mécanisme d'entraînement du rotor qui s'ensuivent peuvent entraîner de graves conséquences.

Il est connu du document de brevet FR 2 929 324 de récupérer de l'énergie électrique par couplage de la source GD à la turbine libre, la source GD étant commutée en mode génératrice après la phase de démarrage. Cette solution nécessite d'ajouter un nouvel équipement, à savoir une bascule de commutation dédiée. Cet ajout a un impact en termes de coûts et de masse, et nécessite une modification de l'architecture moteur.

Par ailleurs, le document de brevet FR 2 914 697 propose un système d'assistance aux phases transitoires par l'intégration d'un moteur électrique supplémentaire alimenté par une batterie afin de fournir de l'énergie cinétique au générateur de gaz. Cette solution présente les mêmes inconvénients.

## EXPOSÉ DE L'INVENTION

L'invention vise à réduire les prélèvements mécaniques sur le générateur de gaz, en particulier lors des phases transitoires, afin de conserver une marge au pompage suffisante permettant d'assurer les performances d'accélération du générateur de gaz, et ceci sans génération de puissance supplémentaire, ni besoin de capteurs ou d'actionneurs supplémentaires. Pour ce faire, l'invention prévoit d'augmenter le pouvoir d'accélération/décélération du générateur de gaz en modulant la consigne de régulation de la tension du réseau électrique de bord de l'aéronef.

Plus précisément, la présente invention a pour objet un procédé de génération électrique appliquée à une turbine à gaz d'aéronef et débitant sur un réseau de bord, après la phase de démarrage de la turbine à gaz. Dans ce procédé, le réseau de bord est régulé en tension par une consigne de tension pilotée par une étape de détermination d'état de délestage/lestage d'une source génératrice principale d'électricité du réseau de bord en fonction de la demande de prélèvement de puissance à fournir à la propulsion de l'aéronef, suivie d'une étape de sélection d'une consigne de tension entre plusieurs niveaux en fonction de la détermination de l'état de délestage/lestage, et d'une étape d'application de la consigne sélectionnée à une boucle de régulation de la tension fournie au réseau de bord.

Selon des modes de mise en oeuvre particuliers :

- une source d'électricité reste activée en cas de délestage de la source principale pour alimenter le réseau de bord, cette source tampon pouvant être rechargée lorsque la source principale n'est pas délestée ;

- l'état de délestage/lestage peut être déterminé parmi trois états de délestage, de lestage et stabilisé, en fonction de la variation de vitesse du générateur de gaz et/ou des variations d'inclinaison des pales du rotor, appelé communément « pas collectif », dans le cas d'un hélicoptère ;

- un état de délestage peut être déterminé lorsque la variation de vitesse du générateur de gaz est supérieure ou égale à une borne supérieure, prise entre +2 et +5% par unité de temps, et/ou lorsque la variation de pas collectif est supérieure à une borne supérieure de +10 à +30% de la pleine course du pas collectif par unité de temps dans le cas d'un hélicoptère ;

- un état de lestage peut être déterminé lorsque la variation de vitesse du générateur de gaz est inférieure ou égale à une borne inférieure prise entre -2 et -5% par unité de temps et/ou lorsque la variation du pas collectif est inférieure à une borne supérieure de +10 à +30% de la pleine course du pas collectif par unité de temps ;

- un état de stabilisation peut être déterminé lorsque la variation de vitesse ou du pas collectif sont comprises dans des fourchettes à l'intérieur des bornes supérieures et inférieures;

- au moins trois niveaux de consigne de tension sont déterminés dans une étape de sélection de consigne, en correspondance avec les trois états délestage/lestage/stabilisé déterminés à l'étape précédente : un niveau de consigne médian est sélectionné lorsqu'un état de stabilisation est déterminé à l'étape précédente ou lorsque l'état du réseau de bord est défectueux ; un niveau de consigne bas est sélectionné lorsqu'un état de délestage est déterminée à l'étape précédente, et un niveau de consigne haut est sélectionné lorsqu'un état de lestage est déterminé à l'étape précédente ou lorsqu'un état stabilisé est déterminé afin de recharger la source d'électricité tampon, en particulier suite à une phase d'accélération pendant un état de délestage ;

- chaque sélection de consigne de tension correspond à des phases de vol déterminées : la consigne de tension médiane correspond aux phases intermédiaires stabilisées de vol ; la consigne de tension de délestage, sensiblement inférieure à la consigne de niveau médian, correspond aux accélérations et décollage des phases transitoires ; et la consigne de tension de lestage, sensiblement supérieure à la consigne de niveau médian, correspond aux décélérations et atterrissage des phases transitoires ;

- la consigne de tension de régulation peut être adaptée selon des données d'état de fonctionnement du réseau de bord et/ou de charge de la source tampon;

- l'état du réseau de bord est établi par un état de panne ou de défaut du réseau, ou un état de fonctionnement ou de sensibilité des commandes des consommateurs et accessoires.

L'invention se rapporte également à un système de génération électrique dans un hélicoptère, apte à mettre en oeuvre le procédé ci-dessus. Un tel système de génération électrique comporte un générateur de gaz apte à entraîner un mécanisme de rotor de voilure de propulsion et couplé à une génératrice/démarreur réversible, apte à former une source d'énergie cinétique du générateur de gaz ou une source d'alimentation électrique d'un réseau de bord. Une unité de commande numérique intègre un module de sélection de consigne de génération de tension du réseau de bord. Ce module est apte à sélectionner une consigne de tension à partir des données fournies par des dispositifs de mesure de vitesse du générateur de gaz ou de la génératrice/démarreur, de mesure de position du pas collectif de la voilure de propulsion et de mesure de tension du réseau de bord. L'unité de commande est apte à appliquer la consigne de tension ainsi sélectionnée au réseau de bord via une boucle de régulation couplé à un régulateur.

## BRÈVE DESCRIPTION DES FIGURES

D'autres aspects, caractéristiques et avantages de l'invention apparaîtront dans la description non limitative qui suit, relative à des modes de réalisation particuliers, en référence aux dessins annexés qui représentent, respectivement :

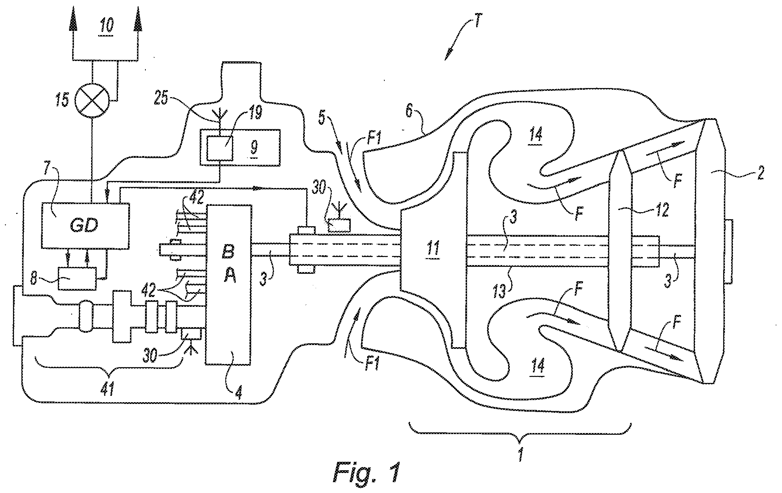

- En figure 1, une vue schématique d'un turbomoteur équipé des moyens aptes à mettre en oeuvre le procédé selon l'invention ;

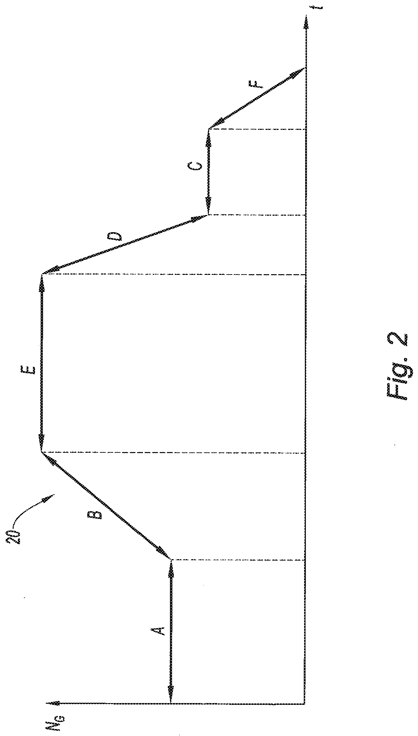

- en figure 2, un exemple de profil de variation dans le temps de la vitesse d'un générateur de gaz d'un turbomoteur pour différentes phases de vol, avec un réseau de bord régulé en tension selon l'invention, et

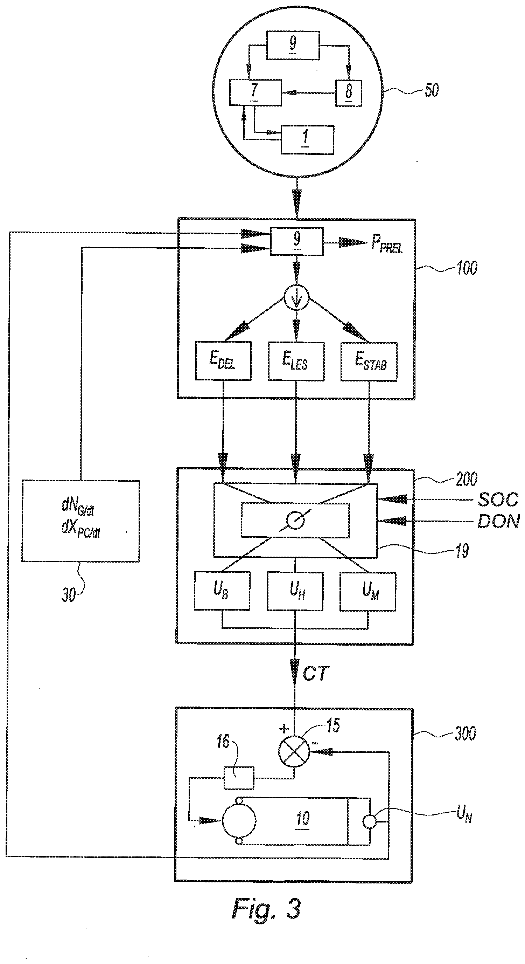

- en figure 3, un exemple de diagramme fonctionnel de moyens mis en oeuvre selon les principales étapes du procédé de l'invention.

## DESCRIPTION DETAILLEE

En référence à la vue schématique de la figure 1, un turbomoteur d'hélicoptère « T » comporte, selon un mode de réalisation de l'invention, un générateur de gaz 1 et une turbine libre 2 qui, après une phase de démarrage, est entraînée en rotation par un flux de gaz $F_g$ à forte énergie cinétique fournie par le générateur de gaz 1.

La turbine libre 2 est montée sur un arbre 3 de transmission d'énergie mécanique à un réducteur permettant l'interfaçage en vitesse avec une boîte d'accessoires BA. Cette BA 4 est apte à transmettre de la puissance au mécanisme d'entraînement 41 du rotor de la voilure de propulsion.

Le générateur de gaz 1 entraîne quant à lui un ensemble d'éléments mécaniques (pompes à carburant...) et électriques (alternateurs, démarreurs...) mais aussi - et de plus en plus selon la tendance du « tout électrique » - les commandes d'équipements hydrauliques (pompes, ...), mécaniques (frein rotor, etc.) ou pneumatiques (compresseurs, climatisation,...). La génération électrique est alors produite via un moteur réversible 7 en mode génératrice GD. La GD étant réversible, elle permet le démarrage par entraînement du générateur de gaz, puis l'alimentation en énergie électrique une fois le générateur de gaz autonome, la GD étant reliée mécaniquement sans roue libre à l'arbre générateur de gaz 13 (voir description ci-après).

Le générateur de gaz 1 comporte un compresseur 11 et une turbine 12 montés sur un arbre rotatif 13, ainsi qu'une chambre de combustion 14 formée entre le compresseur 11 et la turbine 12. Un flux d'air (flèche F1), provenant d'une entrée d'air 5 - formée dans un carter 6 - puis comprimé via le compresseur 11, est refoulé dans la chambre 14 pour y être mélangé au carburant afin de produire, par combustion, le flux de gaz cinétique $F_g$. Ce flux F se détend en traversant la turbine 12 - pour entraîner en rotation le compresseur 11 via l'arbre rotatif 13 - puis la turbine libre 2 pour entraîner en rotation l'arbre de transmission 3.

La transmission d'énergie mécanique illustrée par la figure 1 est du type à prise de mouvement avant avec renvoi par l'arbre de transmission traversant 3 colinéaire à l'arbre rotatif 13. Alternativement, une prise de mouvement avant avec renvoi par un arbre extérieur ou une prise de mouvement arrière peuvent être mises en oeuvre sans sortir du cadre de l'invention.

Le turbomoteur « T » comporte également un moteur électrique réversible 7 apte à fonctionner en génératrice électrique pour alimenter les commandes électriques 42 des consommateurs et des accessoires du réseau de bord 10. Ce moteur électrique réversible constitue une source génératrice/démarreur, en abrégé GD. De manière équivalente, il est possible d'utiliser également une génératrice-démarreur de type courant continu à balais ou de type sans balai (« brushless » en terminologie anglaise) ou encore un démarreur-alternateur.

Le moteur 7 est couplé à l'arbre 13, afin d'entraîner en rotation le générateur de gaz 1 pendant la phase de démarrage. Quelque soit la phase de vol, la GD reste liée au générateur de gaz et tourne à une vitesse proportionnelle à celle du générateur de gaz.

La batterie d'alimentation de la GD au démarrage ou une batterie auxiliaire 8, par exemple des accumulateurs ou une batterie à bobine de stockage supraconductrice, participe également à la génération électrique. Cette batterie 8 peut ainsi fournir de l'énergie électrique en quantité suffisante afin de ne pas faire chuter la tension du réseau de bord 10 pendant des phases d'accélération alors que, comme décrit ci-après, le moteur réversible 7 en mode génératrice est délesté. La batterie 8 est également sollicitée en phase de démarrage pour démarrer le moteur 7 en mode « moteur » afin d'entraîner l'arbre 13 du générateur de gaz 1.

Une recharge accélérée de la batterie 8 est via le moteur réversible 7 en mode génératrice, pendant les phases de décélération et, de manière appropriée comme expliqué plus loin, pendant des phases stabilisées.

Afin de contrôler la génération électrique du réseau de bord 10 en fonction des différentes phases de vol, une unité de commande numérique 9, classiquement dénommée FADEC (initiales de « Full Authority Digital Engine Controler » en terminologie anglaise), intègre un module de sélection 19 de consigne de tension à appliquer au réseau de bord 10. Le module 19 reçoit des données fournies par différents dispositifs de mesure et calcule leurs variations dans le temps en liaison avec l'unité 9 : mesures et variations de la vitesse du générateur de gaz, $N_G$ et de la position du pas collectif du rotor, $X_{PC}$, ainsi que la mesure de tension effective $U_N$ du réseau de bord 10 afin de s'assurer du suivi de la consigne.

L'unité de commande 9 émet une consigne de tension de régulation du réseau de bord selon les phases de vol. Cette consigne est transmise à la boucle de régulation 15, qui en conséquence va piloter la puissance délivrée par la GD et de fait son couple prélevé sur le générateur de gaz.

Un exemple de succession de phases de vol d'un hélicoptère est illustré sur la figure 2 par le profil de vol 20, en portant la vitesse $N_G$ du générateur de gaz en fonction du temps « t ».

Dans les phases d'accélération « B », le taux de prélèvement de puissance dédiée au moteur réversible en mode génératrice est fortement minimisé voire annulé, en fonction des besoins, par l'unité de commande : le moteur réversible est alors délesté pour fournir la puissance au rotor de la voilure de propulsion. Les besoins du réseau de bord sont alors assurés par la batterie tampon. Dans les phases stabilisées « A », « C » ou « E », les besoins électriques du réseau de bord sont assurés par le moteur réversible.

La batterie peut alors être rechargée dans ces phases stabilisées, en particulier pendant une durée limitée après une phase d'accélération. En phase de décélération « D » ou d'atterrissage « F », le taux de prélèvement dédié au moteur réversible en mode génératrice est maximisé et la batterie peut également être rechargée.

En référence à la figure 3, il est maintenant décrit un diagramme fonctionnel qui illustre les différentes étapes de déclenchement de la génération électrique du réseau de bord lors de la succession des phases de vol « A » à « F » ci-dessus. Ces étapes font suite à une phase de démarrage 50 dans laquelle l'unité de commande 9 démarre le moteur 7 alimenté par la batterie 8. Le générateur de gaz 1 est alors entraîné selon une mise en route connue, jusqu'à ce que le générateur de gaz 1 soit autonome. A la fin de cette phase de démarrage, l'unité de commande 9 commute le moteur réversible 7 en mode génératrice.

Dans une première étape 100 de sélection d'état de délestage/lestage du moteur réversible 7 en mode génératrice, la demande de prélèvement de puissance $P_{PREL}$ à fournir au rotor de propulsion est évaluée par l'unité de commande 9 en fonction des conditions de vol.

Ainsi, selon un exemple appliqué au turbomoteur ci-dessus, la demande de prélèvement $P_{PREL}$ est évaluée par l'unité de commande 9 en fonction des variations de vitesse $dN_G/dt$ du générateur de gaz 1 et du pas collectif $dX_{PC}/dt$ à partir de capteurs 30, par transmission de données au module de sélection 19. La transmission peut se faire par tout câblage approprié ou par ondes radio via des antennes émettrices/réceptrices 25 adaptées (figure 1).

L'étape de sélection d'état 100 du moteur 7 en mode génératrice est déterminé parmi trois états : état de délestage $E_{DEL}$ correspondant aux phases d'accélération, un état de lestage $E_{LES}$, correspondant aux phases de décélération, et un état stabilisé $E_{STAB}$, correspondant aux phases stabilisées, en fonction de valeurs de référence de $dN_G/dt$ et de $dX_{PC}/dt$. Dans l'exemple :

- l'état de délestage $E_{DEL}$ est déterminé lorsque la variation de vitesse $dN_G/dt$ est supérieure ou égale à +3% par unité de temps ou lorsque la variation du pas collectif $dX_{PC}/dt$ est supérieure à +20% de la pleine course XPC par unité de temps ;

- l'état de lestage $E_{LES}$ est déterminé lorsque la variation de vitesse $dN_G/dt$ est inférieure ou égale à -3% ou lorsque la variation du pas collectif $dX_{PC}/dt$ est inférieure à -20% par unité de temps ;

- l'état stabilisé $E_{STAB}$ est déterminé lorsque :

$$-1\% < dN_G/dt < +1\% \quad \text{et} \quad -10\% < dX_{PC}/dt < +10\%$$

A chacun de ces états $E_{DEL}$, $E_{LES}$ et $E_{STAB}$ correspond, dans une étape de sélection de consigne de tension 200, un niveau de consigne de tension CT géré par le module 19 parmi trois niveaux de consigne de tension $U_B$, $U_H$ et $U_M$ à appliquer au réseau de bord :

- le niveau de consigne bas $U_B$, de +24 volts dans l'exemple, lorsqu'un état de délestage $E_{DEL}$ est déterminé en phase d'accélération du générateur de gaz ;

- le niveau de consigne haut $U_H$, de +30 volts dans l'exemple, lorsqu'un état de lestage $E_{LES}$ est sélectionné en phase de décélération, ou lorsqu'un état stabilisé $E_{STAB}$ est déterminé - afin de recharger la batterie tampon pendant une durée limitée, par exemple quelques secondes, selon son état de charge SOC (initiales de « State Of Charge » en terminologie anglaise) suivi par un dispositif dédié - en particulier lorsque l'état stabilisé fait suite à une phase d'accélération ;

- le niveau de consigne médian $U_M$, de +28 volts dans l'exemple, lorsqu'un état stabilisé $E_{STAB}$ est déterminé à l'étape précédente ou lorsque des défauts de fonctionnement du réseau DON (initiales de « Defects On NETWORK » en terminologie anglaise) sont détectées par des capteurs dédiées sur le réseau de bord - ou par la lecture de sa tension d'alimentation par le FADEC - et transmises à l'étape de sélection de tension 200 : panne réseau l'état du réseau de bord, commandes électriques, consommateurs sensibles ou défectueux, etc.

Le niveau de tension CT ainsi sélectionné est appliqué, dans une étape d'application 300, à l'entrée d'une boucle de régulation 15 de la tension appliquée au réseau de bord 10, la boucle étant couplée à un régulateur 16.

La tension effective $U_N$ du réseau de bord 10, celle introduite dans la boucle 15 pour être comparée à la consigne de tension CT, est mesurée et transmise à l'unité de commande 9. Dans le cas où un état de délestage $E_{DEL}$ de la source principale 7 a été déterminé, la tension est fournie par la batterie 8 : l'unité de commande 9 vérifie alors si cette tension est suffisante pour le réseau et, en cas d'insuffisance, si un lestage de la source principale est possible, au moins pendant une courte durée.

L'invention n'est pas limitée par les exemples décrits et représentés. Il est par exemple possible de définir plus de trois niveaux de consigne de tension pour le réseau de bord en différentiant des sous-niveaux correspondant à différents niveaux d'accélération du générateur de puissance, ou d'autres phases transitoires (vol stationnaire, recherche à basse altitude au-dessus de la mer, etc.). Par ailleurs, plusieurs sources réversibles principales et/ou plusieurs sources d'électricité secondaires peuvent être utilisées.

## Revendications

1. Procédé de contrôle de la génération électrique appliquée à une turbine à gaz (T) d'aéronef et débitant sur un réseau de bord (10), **caractérisé en ce que**, après une phase de démarrage (50) de la turbine à gaz (T), le réseau de bord (10) est régulé en tension par une consigne de tension (CT) pilotée par une étape de détermination d'état (100) de délestage/lestage ($E_{DEL}$, $E_{LES}$, $E_{STAB}$) d'une source génératrice principale d'électricité (7) du réseau de bord (10) en fonction de la demande de prélèvement de puissance ($P_{PREL}$) à fournir à la propulsion (41) de l'aéronef, suivie d'une étape de sélection (200) d'une consigne de tension (CT) entre plusieurs niveaux ($U_H$, $U_B$, $U_M$) en fonction de la détermination de l'état de délestage/lestage, et d'une étape d'application de la consigne sélectionnée (300) à une boucle de régulation de la tension (15) fournie au réseau de bord (10).

2. Procédé de génération électrique selon la revendication 1, dans lequel une source d'électricité (8) est activée en cas de délestage ($E_{DEL}$) de la source principale (7) pour alimenter le réseau de bord (10), cette source tampon (8) pouvant être rechargée lorsque la source principale (7) n'est pas délestée ($E_{LES}$, $E_{STAB}$).

3. Procédé de génération électrique selon l'une des revendications 1 ou 2, dans lequel l'état de délestage/lestage est déterminée (100) parmi trois états de délestage ($E_{DEL}$), de lestage ($E_{LES}$) et stabilisé ($E_{STAB}$), en fonction de la variation de vitesse du générateur de gaz ($dN_G/dt$), et/ou des variations du pas collectif d'inclinaison des pales du rotor ($dX_{PC}/dt$) dans le cas d'un hélicoptère.

4. Procédé de génération électrique selon la revendication précédente, dans lequel l'état de délestage ($E_{DEL}$) est déterminé lorsque la variation de vitesse du générateur de gaz ($dN_G/dt$) est supérieure ou égale à une borne supérieure, prise entre +2 et +5% par unité de temps, et/ou lorsque la variation de pas collectif ($dX_{PC}/dt$) est supérieure à une borne supérieure de +10 à +30% de la pleine course par unité de temps, dans le cas d'un hélicoptère.

5. Procédé de génération électrique selon la revendication 3, dans lequel l'état de lestage ($E_{LES}$) est déterminé lorsque la variation de vitesse du générateur de gaz ($dN_G/dt$) est inférieure ou égale à une borne inférieure, prise entre -2 et -5%, et/ou lorsque la variation du pas collectif ($dX_{PC}/dt$) est inférieure à une borne supérieure de +10 à +30 % de la pleine course du pas collectif par unité de temps.

6. Procédé de génération électrique selon la revendication 3, dans lequel l'état de stabilisation ($E_{STAB}$) est déterminé lorsque la variation de vitesse ou du pas collectif sont comprises dans des fourchettes à l'intérieur des bornes supérieures et inférieures définies aux revendications 4 et 5.

7. Procédé de génération électrique selon la revendication 1, dans lequel au moins trois niveaux ($U_H$, $U_B$, $U_M$) de consigne de tension (CT) sont déterminés dans l'étape de sélection de consigne (200), en correspondance avec les trois états délestage/lestage/stabilisé ($E_{DEL}$, $E_{LES}$, $E_{STAB}$), déterminés à l'étape précédente (100) : un niveau de consigne médian ($U_M$) est sélectionné lorsqu'un état de stabilisation ($E_{STAB}$) est déterminé à l'étape précédente (100) ou lorsque l'état du réseau de bord (10) est défectueux (SOC, $D_{DON}$) ; un niveau de consigne bas ($U_B$) est sélectionné lorsqu'un état de délestage ($E_{DEL}$) est déterminée à l'étape précédente (100), et un niveau de consigne haut ($U_H$) est sélectionné lorsqu'un état de lestage ($E_{LES}$) est déterminé à l'étape précédente (100) ou lorsqu'un état stabilisé ($E_{STAB}$) est déterminé afin de recharger la source d'électricité tampon (8), en particulier suite à une phase d'accélération du générateur de gaz (1) pendant un état de délestage ($E_{DEL}$).

8. Procédé de génération électrique selon la revendication précédente, dans lequel la consigne de tension (CT) appliquée au réseau de bord (10) est adaptée selon l'état de fonctionnement du réseau de bord ($D_{DON}$) et/ou de charge de la source tampon (SOC).

9. Procédé de génération électrique selon la revendication précédente, dans lequel l'état du réseau de bord (DON) est établi en fonction d'un état de panne ou de défaut du réseau (10), ou d'un état de fonctionnement ou de sensibilité des commandes (42) des consommateurs et accessoires.

10. Système de génération électrique dans un hélicoptère, apte à mettre en oeuvre le procédé selon l'une quelconque des revendications précédentes, comportant une génératrice/démarreur réversible (7), un générateur de gaz (1) apte à entraîner un mécanisme (41) de rotor de voilure de propulsion et couplé à la génératrice/démarreur (7) qui est apte à lui fournir la source d'énergie cinétique, des dispositifs de mesure de vitesse ($N_G$) du générateur de gaz (1) ou de la génératrice/démarreur (7), un réseau de bord (10) qui est apte à être alimenté par la génératrice/démarreur (7) et une unité de commande numérique (9), **caractérisé en ce que** l'unité de commande (9) intègre un module de sélection de consigne de tension (19) du réseau de bord (10) et une boucle de régulation (15) couplée à un régulateur (16), ce module étant apte à sélectionner une consigne de tension (CT) à partir des données fournies par les dispositifs de mesure de vitesse ($N_G$), de mesure de position du pas collectif ($X_{PC}$) de la voilure de propulsion et de mesure de tension ($U_N$) du réseau de bord (10), et **en ce que** l'unité de commande (9) est apte à appliquer la consigne de tension (CT) ainsi sélectionnée au réseau de bord (10) via la boucle de régulation (15).

11. Système de génération électrique selon la revendication précédente, dans lequel une batterie tampon (8) est apte à se substituer à la génératrice/démarreur (7) pour former la génération électrique du réseau de bord (10) au moins pendant des états de délestage ($E_{DEL}$) de la génératrice/démarreur (7).

12. Système de génération électrique selon la revendication précédente, dans lequel un dispositif est apte à suivre l'état de charge (SOC) de la batterie (8) et des capteurs sont aptes à détecter des défauts de fonctionnement du réseau (DON), en particulier des commandes électriques (42).

**Patentansprüche**

1. Verfahren zur Steuerung der Stromversorgung, die auf eine Gasturbine (T) eines Luftfahrzeugs angewendet wird und ein Bordnetz (10) belastet, **dadurch gekennzeichnet, dass** das Bordnetz (10) nach einer Anlaufphase (50) der Gasturbine (T) durch einen Spannungssollwert (CT) spannungsgeregelt wird, der durch einen Schritt des Bestimmens (100) des Zustands der Entlastung/Belastung ($E_{DEL}$, $E_{LES}$, $E_{STAB}$) einer Hauptstromerzeugungsquelle (7) des Bordnetzes (10) in Abhängigkeit von der Anforderung zur Entnahme von Leistung ($P_{PREL}$), die dem Antrieb (41) des Luftfahrzeugs zuzuführen ist, gesteuert wird, auf den ein Schritt des Auswählens (200) eines Spannungssollwertes (CT) zwischen mehreren Ebenen ($U_H$, $U_B$, $U_M$) in Abhängigkeit von dem Bestimmen des Zustands der Entlastung/Belastung und ein Schritt des Anwendens des ausgewählten Sollwertes (300) auf einen Regelkreis der Spannung (15), die dem Bordnetz (10) zugeführt wird, folgt.

2. Stromversorgungsverfahren nach Anspruch 1, wobei eine Stromquelle (8) im Fall der Entlastung ($E_{DEL}$) der Hauptquelle (7) aktiviert wird, um das Bordnetz (10) mit Strom zu versorgen, wobei diese Pufferquelle (8) wieder aufgeladen werden kann, wenn die Hauptquelle (7) nicht entlastet wird ($E_{LES}$, $E_{STAB}$).

3. Stromversorgungsverfahren nach einem der Ansprüche 1 oder 2, wobei der Zustand der Entlastung/Belastung unter drei Zuständen der Entlastung ($E_{DEL}$), der Belastung ($E_{LES}$) und einem stabilisierten Zustand ($E_{STAB}$) in Abhängigkeit von der Änderung der Geschwindigkeit des Gasgenerators ($dN_G/dt$) und/oder den Änderungen des kollektiven Blatteinstellwinkels der Rotorblätter ($dX_{PC}/dt$) im Fall eines Hubschraubers bestimmt wird (100).

4. Stromversorgungsverfahren nach dem vorhergehenden Anspruch, wobei der Zustand der Entlastung ($E_{DEL}$) bestimmt wird, wenn die Änderung der Geschwindigkeit des Gasgenerators ($dN_G/dt$) größer als oder gleich einer Obergrenze ist, die zwischen +2 und + 5 % pro Zeiteinheit genommen wird, und/oder wenn die Änderung des kollektiven Blatteinstellwinkels ($dX_{PC}/dt$) größer als eine Obergrenze von +10 bis +30 % des gesamten Wegs pro Zeiteinheit im Fall eines Hubschraubers ist.

5. Stromversorgungsverfahren nach Anspruch 3, wobei der Zustand der Belastung ($E_{LES}$) bestimmt wird, wenn die Änderung der Geschwindigkeit des Gasgenerators ($dN_G/dt$) kleiner als oder gleich einer Untergrenze ist, die zwischen -2 und -5 % pro Zeiteinheit genommen wird, und/oder wenn die Änderung des kollektiven Blatteinstellwinkels ($dX_{PC}/dt$) kleiner als eine Obergrenze von +10 bis +30 % des gesamten Wegs des Blatteinstellwinkels pro Zeiteinheit ist.

6. Stromversorgungsverfahren nach Anspruch 3, wobei der Zustand der Stabilisierung ($E_{STAB}$) bestimmt wird, wenn die Änderung der Geschwindigkeit oder des kollektiven Blatteinstellwinkels innerhalb von Spannen innerhalb der Ober- und Untergrenzen liegen, die in den Ansprüchen 4 und 5 definiert sind.

7. Stromversorgungsverfahren nach Anspruch 1, wobei mindestens drei Ebenen ($U_H$, $U_B$, $U_M$) des Spannungssollwert (CT) in dem Schritt des Auswählens des Sollwertes (200) in Übereinstimmung mit den drei Zuständen der Entlastung/Belastung/dem stabilisierten Zustand ($E_{DEL}$, $E_{LES}$, $E_{STAB}$), die in dem vorhergehenden Schritt (100) bestimmt werden, bestimmt werden: eine mittlere Sollwertebene ($U_M$) wird ausgewählt, wenn ein Zustand der Stabilisierung ($E_{STAB}$) in dem vorhergehenden Schritt (100) bestimmt wird oder wenn der Zustand des Bordnetzes (10) defekt ist (SOC, $D_{DON}$); eine niedrige Sollwertebene ($U_B$) wird ausgewählt, wenn ein Zustand der Entlastung ($E_{DEL}$) in dem vorhergehenden Schritt (100) bestimmt wird, und eine hohe Sollwertebene ($U_H$) wird ausgewählt, wenn ein Zustand der Belastung ($E_{LES}$) in dem vorhergehenden Schritt (100) bestimmt wird oder wenn ein stabilisierter Zustand ($E_{STAB}$) bestimmt wird, um die Pufferstromquelle (8) wieder aufzuladen, insbesondere nach einer Beschleunigungsphase des Gasgenerators (1) während eines Zustands der Entlastung ($E_{DEL}$).

8. Stromversorgungsverfahren nach dem vorhergehenden Anspruch, wobei der Spannungssollwert (CT), der auf das Bordnetz (10) angewendet wird, nach dem Betriebszustand des Bordnetzes ($D_{DON}$) und/oder dem Ladezustand der Pufferquelle (SOC) angepasst wird.

9. Stromversorgungsverfahren nach dem vorhergehenden Anspruch, wobei der Zustand des Bordnetzes (DON) in Abhängigkeit von einem Störungs- oder Fehlerzustand (10) oder von einem Betriebs- oder Empfindlichkeitszustand der Steuerungen (42) der Verbraucher und Zusatzgeräte festgelegt wird.

10. Stromversorgungssystem in einem Hubschrauber, das geeignet ist, das Verfahren nach einem der vorhergehenden Ansprüche umzusetzen, umfassend einen umkehrbaren Generator/Anlasser (7), einen Gasgenerator (1), der geeignet ist, einen Rotormechanismus (41) des Antriebsflügels anzutreiben und mit dem Generator/Anlasser (7) verbunden ist, der geeignet ist, ihm die kinetische Energiequelle bereitzustellen, Geschwindigkeitsmessvorrichtungen ($N_G$) des Gasgenerators (1) oder des Generators/Anlassers (7), ein Bordnetz (10), das geeignet ist, von dem Generator/Anlasser (7) mit Energie versorgt zu werden, und eine numerische Steuereinheit (9), **dadurch gekennzeichnet, dass** die Steuereinheit (9) ein Auswahlmodul des Spannungssollwertes (19) des Bordnetzes (10) und einen Regelkreis (15) aufweist, der mit einem Regler (16) verbunden ist, wobei dieses Modul geeignet ist, einen Spannungssollwert (CT) aus den Daten auszuwählen, die von den Vorrichtungen zur Geschwindigkeitsmessung ($N_G$), zur Positionsmessung des kollektiven Blatteinstellwinkels ($X_{PC}$) der Antriebsflügel und zur Messung der Spannung ($U_N$) des Bordnetzes (10) bereitgestellt werden, und dass die Steuereinheit (9) geeignet ist, um den auf diese Weise ausgewählten Spannungssollwert (CT) über den Regelkreis (15) an das Bordnetz (10) anzulegen.

11. Stromversorgungssystem nach dem vorhergehenden Anspruch, wobei eine Pufferbatterie (8) geeignet ist, den Generator/Anlasser (7) zu ersetzen, um die Stromversorgung des Bordnetzes (10) mindestens während der Zustände der Entlastung ($E_{DEL}$) des Generators /Anlassers (7) zu bilden.

12. Stromversorgungssystem nach dem vorhergehenden Anspruch, wobei eine Vorrichtung geeignet ist, den Ladezustand (SOC) der Batterie (8) zu verfolgen und Sensoren geeignet sind, Fehlfunktionen des Netzes (DON), insbesondere der elektrischen Steuerungen (42), zu erkennen.

**Claims**

1. Method for controlling the generation of electricity which is applied to an aircraft gas turbine (T) and outputs into an on-board network (10), **characterized in that**, after a phase for starting (50) the gas turbine (T), the voltage of the on-board network (10) is regulated by means of a voltage set point (CT) controlled by a step for determining (100) the unloading/loading status ($E_{DEL}$, $E_{LES}$, $E_{STAB}$) of a main electricity-generating source (7) of the on-board network (10) according to the request for power bleed ($P_{PREL}$) to be supplied to the propulsion (41) of the aircraft, followed by a step for selecting (200) a voltage set point (CT) among several levels ($U_H$, $U_B$, $U_M$) according to the determination of the unloading/loading status, and by a step for applying the selected set point (300) to a loop for regulating the voltage (15) supplied to the on-board network (10).

2. Method for generating electricity according to claim 1, in which a source of electricity (8) is activated in case of unloading ($E_{DEL}$) of the main source (7) in order to feed the on-board network (10), whereas this buffer source 8 can be recharged when the main source (7) is not being unloaded ($E_{LES}$, $E_{STAB}$).

3. Method for generating electricity according to one of claims 1 or 2, in which the unloading/loading status (100) is determined among three statuses, namely unloading ($E_{DEL}$), loading ($E_{LES}$) and stabilized ($E_{STAB}$), according to the speed variation of the gas generator ($dN_G/dt$), and/or variations in the collective pitch of inclination ($dX_{PC}/dt$) of the rotor blades in the case of a helicopter.

4. Method for generating electricity according to the preceding claim, in which the unloading status ($E_{DEL}$) is determined when the speed variation of the gas generator ($dN_G/dt$) is at least equal to an upper bound, taken between +2 and +5% per time unit, and/or when the collective pitch variation ($dX_{PC}/dt$) is higher than an upper bound by +10 to +30% of the full travel per time unit in the case of a helicopter.

5. Method for generating electricity according to claim 3, in which the loading status ($E_{LES}$) is determined when the speed variation of the gas generator ($dN_G/dt$) is lower than or equal to a lower bound, taken between -2 and -5%, and/or when the collective pitch variation ($dX_{PC}/dt$) is lower than an upper bound by +10 to +30% of the full travel of the collective pitch per time unit.

6. Method for generating electricity according to claim 3, in which the stabilization status ($E_{STAB}$) is determined when the variation in speed or in the collective pitch are contained between ranges within the upper and lower bounds defined in claims 4 and 5.

7. Method for generating electricity according to claim 1, in which at least three levels ($U_H$, $U_B$, $U_M$) of the voltage set point (CT) are determined in the set point selection step (200), in relation with the three unloading/loading/stabilized statuses ($E_{DEL}$, $E_{LES}$, $E_{STAB}$) which have been determined in the preceding step (100): a median set-point level ($U_M$) is selected when a stabilization status ($E_{STAB}$) has been determined in the preceding step (100) or when the state of the on-board network (10) is defective (SOC, $D_{DON}$); a lower set-point level ($U_B$) is selected when an unloading status ($E_{DEL}$) has been determined in the preceding step (100); and an upper set-point level ($U_H$) is selected when a loading status ($E_{LES}$) has been determined in the preceding step (100) or when a stabilized status ($E_{STAB}$) has been determined in order to recharge the buffer source of electricity (8), in particular further to an acceleration phase of the gas generator (1) during an unloading status ($E_{DEL}$).

8. Method for generating electricity according to the preceding claim, in which the voltage set point (CT) applied to the on-board network (10) is adjusted according to the state of work of the on-board network ($D_{DON}$) and/or state of charge of the buffer source (SOC).

9. Method for generating electricity according to the preceding claim, in which the state of the on-board network (DON) is established according to a state of failure or defect of the network (10), or a state of work or sensitivity of the controls (42) of the consumers and accessories.

10. Electrical generation system in a helicopter (T) capable of implementing the method according to any one of the preceding claims, comprising: a reversible starter-generator (7); a gas generator (1) capable of driving a mechanism (41) of a propulsion-wing rotor and coupled with the starter-generator (7) which is capable of supplying it with the kinetic energy source; devices for measuring the speed ($N_G$) of the gas generator (1) or the starter-generator (7); an on-board network (10) which can be fed by the starter-generator (7); and a numerical control unit (9); **characterized in that** the control unit (9) includes a module for selecting the voltage set point (19) of the on-board network (10) and a regulation loop (15) coupled with a regulator (16), this module being capable of selecting a voltage set point (CT) from the data supplied by the devices for measuring the speed ($N_G$), for measuring the position of the collective pitch ($X_{PC}$) of the propulsion wing and for measuring the voltage ($U_N$) of the on-board network (10), and **in that** the control unit (9) is capable of applying the so selected voltage set point (CT) to the on-board network (10) via the regulation loop (15).

11. Electrical generation system according to the preceding claim, in which a buffer battery (8) is capable of substituting for the starter-generator (7) in order to form the electrical generation for the on-board network (10) at least during unloading statuses ($E_{DEL}$) of the starter-generator (7).

12. Electrical generation system according to the preceding claim, in which a device is capable of monitoring the state of charge (SOC) of the battery (8) and sensors are capable of detecting malfunctions of the network (DON), in particular of the electric controls (42).

*Fig. 1*

*Fig. 2*

*Fig. 3*

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2929324

- FR 2914697